# EUROPEAN PATENT APPLICATION

(11) **EP 1 883 230 A2**
(43) Date of publication of application: **30.01.2008**
(21) Application number: 07102802.1
(22) Date of filing: 21.02.2007
(51) Int. Cl.: H04N 5/445

(54) **Content Preprocessing**

(30) Priority: 28.07.2006 KR 20060071571
(71) Applicant: Samsung Electronics Co., Ltd., Yeongtong-gu Suwon-city, Gyeonggi-do 442-742 (KR)
(72) Inventor: Koo, Min-soo, Seoul (KR); Choi, Sung-hwan, Seoul (KR)
(74) Representative: Walaski, Jan Filip

(57) **Abstract**

A method of preprocessing content including displaying a content list including content items, determining a required length of time of an interval during which one content item, included in the list, is selected by a user, and performing preprocessing of the one content item so as to prepare to execute the content corresponding to the one content item based on the determined required length of time.

## Description

The present invention relates to a content providing apparatus, and more particularly, to a content preprocessing method which predicts multimedia content that is to be executed by a user, and, by performing preprocessing of the predicted content, is able to relatively quickly execute the content, and a content providing apparatus using this method.

Recently, there has been a large increase in the use of multimedia content reproducing apparatuses, such as portable multimedia players, or MP3 players. By using a user input apparatus that may be formed with a 4 direction lever or keypad, a user is able to search through a multimedia content list on a display screen, select desired multimedia content, and execute the multimedia content. Also, the user may execute a program driven in a multimedia content reproducing apparatus using the user input apparatus. However, before the selected content or program is executed after the user selects the content or program in the multimedia content reproducing apparatus, a time delay occurs. Accordingly, the user has to wait until the content or program is executed.

An aspect of the present invention provides a content preprocessing method which predicts multimedia content that is to be executed by a user, and, by performing preprocessing of the predicted content, is able to relatively quickly execute the content, and a content providing apparatus using this method.

Aspects of the present invention also provide a content preprocessing method which quickly executes multimedia content by separately managing multimedia content data that a user frequently uses, and a content providing apparatus using this method.

According to an aspect of the present invention, there is provided a method of preprocessing content including displaying a content list including content items, determining a required length of time of an interval during which one content item, included in the list, is selected by a user, and performing preprocessing of the one content item so as to prepare to execute the content corresponding to the one content item based on the determined required length of time.

The interval in which one content item is being selected by the user input may be an interval in which a displayed cursor, moved according to an input signal generated by the user, remains on the content item.

The performing of preprocessing so as to execute the content corresponding to the content item based on the determined time may include: determining a reference time to determine whether or not to perform preprocessing of the content corresponding to the content item; and preprocessing the content corresponding to the content item based on the reference time.

In the determining of the reference time, the reference time may be determined as an average value of the amounts of time taken by the user input signal to select content items included in the content list.

The determining of the reference time may be performed when the interval that each content item is being selected by the user input signal is included in a predetermined range including the average value.

The preprocessing may include pre-reading of the content.

The method may further include: managing the grade of the content on which preprocessing has been performed; and storing part of the content on which preprocessing has been performed based on the grade in a prebuffer.

The managing of the grade of the content on which preprocessing has been performed may further include, if an execution command for the content on which preprocessing has been performed is input, raising the grade, and if an execution command for a content file other than the content on which preprocessing has been performed is input, lowering the grade.

The part of the content may include metadata that needs to be processed with priority in order to execute the content.

The storing of the part of the content on which preprocessing has been performed in the prebuffer based on the grade may be performed when the grade is equal to or higher than a lowest grade among grades corresponding to content files stored in the prebuffer.

According to an aspect of the present invention, there is provided a content providing apparatus comprising: a storage unit to store a plurality of content files; a user interface unit to receive a user input signal; an output unit to display a content list of the stored content files; and a control unit to determine a required length of time of an interval during which one content item, included in the list, is selected by a user, and to perform preprocessing of the one content item so as to prepare to execute the content corresponding to the one content item based on the determined required length of time.

These and/or other aspects and advantages of the invention will become apparent and more readily appreciated from the following description of the embodiments, taken in conjunction with the accompanying drawings in which:
FIGS. 1A, 1B and 1C are diagrams illustrating a method of preprocessing content according to an embodiment of the present invention;
FIG. 2 is a block diagram illustrating an apparatus for providing content according to an embodiment of the present invention;
FIG. 3 is a diagram illustrating a structure of a content list according to an embodiment of the present invention;
FIG. 4 is a diagram illustrating a structure of a prebuffer list according to an embodiment of the present invention;
FIG. 5 is a flowchart illustrating a method of preprocessing content according to an embodiment of the present invention;
FIG. 6 is a flowchart illustrating a method of providing content by using a method of preprocessing content according to an embodiment of the present invention; and
FIG. 7 is a diagram illustrating a process in which when part of content for which a content execution command is received is stored in a prebuffer, the content stored in the prebuffer and a buffer memory is executed according to an embodiment of the present invention.

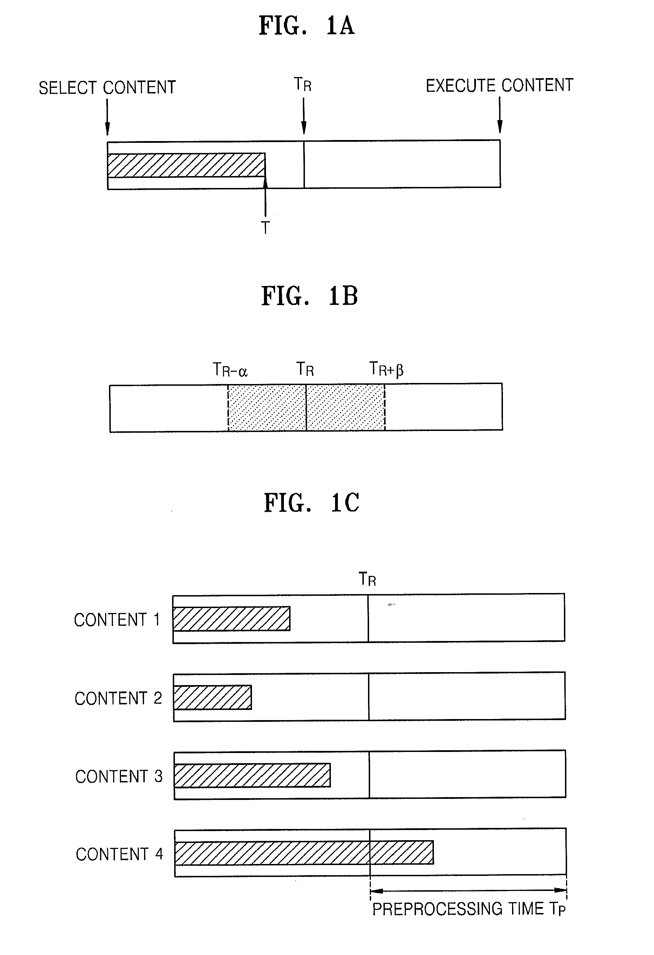

FIGS. 1A, 1B and 1C are diagrams illustrating a method of preprocessing content according to an embodiment of the present invention. When a user executes multimedia content using a content providing apparatus which provides multimedia content, the user confirms the multimedia content that the user desires to be executed, while, at the same time, viewing a content list provided on a display screen of the content providing apparatus. Generally, the user manipulates a user input apparatus (e.g., a cursor), which moves according to a user input signal that indicates the title of the multimedia content. For example, according to the user input signal, a content title is highlighted on the screen.

It is assumed that an interval from the moment that the user positions the cursor of the screen on one content item included in the content list, to the moment that the user confirms the content item currently indicated by the cursor is interval A. Interval A also describes the time required for the user to move the cursor to a next content item (i.e., the time elapsed from when the cursor is positioned on the content item on the screen to when the cursor is moved to a next content item) if the content item is not one that the user wants to be executed. It is also assumed that an interval from the moment that the user positions the cursor on the content item currently indicated by the cursor, to the moment that the user confirms the content item is interval B (which will also be referred to as the "execution interval"). Interval B also describes the time required for the user to execute the content item if the content item currently indicated by the cursor is one that the user wants to be executed (i.e., the time elapsed from when the cursor is positioned on the content item on the screen to when the content item is executed). Generally, interval B is longer than interval A. Accordingly, if it is predicted that the content item confirmed by the user is one that the user wants to be executed, and if procedures to execute the predicted content are performed in advance, the execution interval of the content is reducible.

Hereinafter, the operation that the content providing apparatus performs in advance in order to execute the content selected by the user will be referred to as preprocessing. Also, in the present specification, the content includes reproduction programs to execute multimedia data or programs executed in the content providing apparatus as well as multimedia data, such as text, images, audio and video data.

Referring to FIG. 1A, according to an embodiment of the present invention, whether to perform preprocessing to execute multimedia content is determined by comparing a time interval T that describes an amount of time that has elapsed from the moment that the user selects the content, with a reference time T_{R} that is required to preprocess the content. That is, if T is equal to or greater than T_{R}, the preprocessing required to execute the content is performed.

Referring to FIG. 1B, a method of determining the reference time T_{R} will now be explained. A reference time may be set in a variety of ways. For example, a reference time may be an average value of the amounts of time taken by a user to first select respective content items included in a content list and then to cause an input signal in accordance with that selection to be generated. In particular, the average value may be determined by taking an average of the amounts of time taken by the user input signal to select all content items, or by taking an average of the amounts of time taken by the user input signal to select some of the content items. Alternately, the average value may be determined by taking an average of the amounts of time taken by the user input signal to select all of the content items in a predetermined recent period.

Meanwhile, if the interval in which a content item is being selected is too short or too long, a reliable reference time cannot be determined. Accordingly, as illustrated in FIG. 1B, only when the interval T, in which a content item being selected, is included in a predetermined interval that includes a current reference time T_{R} (e.g., a time interval between T_{R} -α and T_{R} +β (where α and β are positive numbers)), may the interval T be used to determine the reference time. Also, in another embodiment of the present invention, if the interval T, during which a content item is being selected, is equal to or greater than T_{R} +β, preprocessing to execute the content should be performed.

Referring to FIG. 1C, since each T for content 1 through 3 is shorter than T_{R}, preprocessing to execute the content 1 through 3 is not performed. However, in the case of content 4, where T is longer than T_{R}, the content providing apparatus of the current embodiment performs preprocessing to execute content 4. As illustrated in FIG. 1C, an interval T_{P} in which preprocessing of content may be performed may be an interval from the reference time T_{R} to the time that the user executes the content.

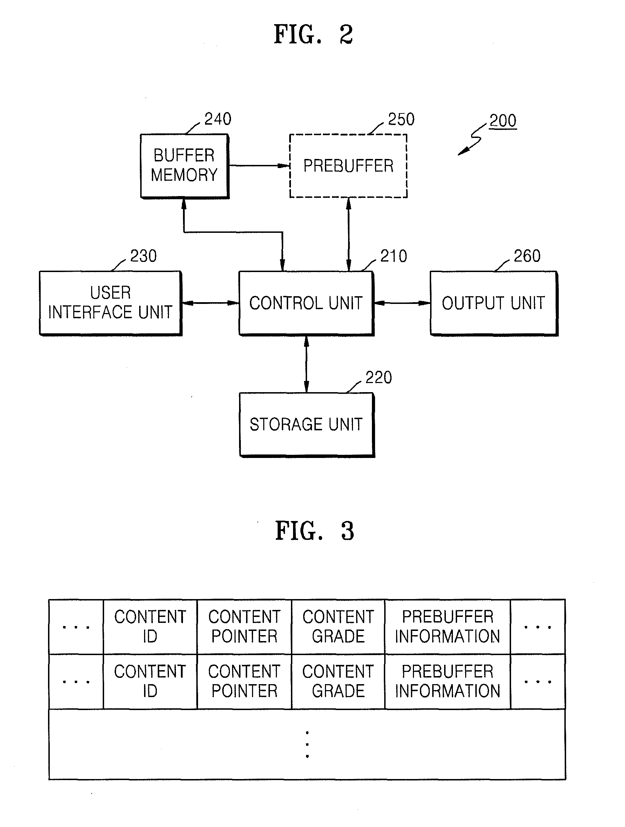

FIG. 2 is a block diagram illustrating an apparatus to provide content according to an embodiment of the present invention. The content providing apparatus, according to the current embodiment, includes a control unit 210, a storage unit 220, a user interface unit 230, a buffer memory 240, a prebuffer 250 and an output unit 260. The control unit 210 controls data communications between the storage unit 220, the user interface unit 230, the buffer memory 240, the prebuffer 250, and the output unit 260, and controls overall operations of the content providing apparatus. The storage unit 220 is a large-capacity information storage medium storing a plurality of content files, and may be implemented as a flash memory, a read-only memory (ROM), random access memory (RAM), a hard disk drive, a recording medium (i.e., a compact disc, a high definition digital versatile disc, etc.), or a combination thereof. The storage unit 220 further includes a content list to manage the plurality of content files.

FIG. 3 is a diagram illustrating a structure of a content list according to an embodiment of the present invention. As shown in FIG. 3, the content list essentially includes content identification (ID), which is a unique ID of each multimedia content, and a content pointer, which is information relating to a location where the content that corresponds to the content ID is stored in the storage unit 220. As will be described below, in order to manage the content by a grading of the content, the content list may further include a content grade and prebuffer information that indicates whether the content is in the prebuffer 250.

The user interface unit 230 receives the user input signal and transfers the signal to the control unit 220. The user interface unit 230 may comprise a keypad, a touch screen, other similar devices, and/or a combination thereof. The output unit 260 displays the content list, including list information of content files in relation to the storage unit 220. To this end, the output unit 260 comprises a display unit to output visual content and may further comprise an audio output unit to output audio content.

The control unit 210 determines an interval during which one content item included in the content list is selected by a user input signal. Then, the control unit 210 performs preprocessing required to execute the content corresponding to the selected content item, based on the determined interval. Here, the interval during which the content item is selected by the user input signal may be determined as an interval in which one of the content items displayed via the output unit 260 is selected by the user input signal and the cursor moved by the user input signal stays on the selected content item.

The control unit 210 may determine that a reference interval is an average value of the amounts of time taken by a user to select content items included in a content list and to generate an input signal in accordance with that selection. Here, if the interval in which each content item is selected by the user input signal is included in a predetermined range including the average value, the control unit 210 again calculates the average value. Thus, the control unit 210 may update the reference time. For example, as illustrated in FIG. 1B, when the interval T in which a content item is being selected is included in a predetermined interval including a current reference time T_{R}, (i.e., between T_{R} -α and T_{R} +β) the current reference time T_{R} may be determined again.

The buffer memory 240 buffers content from the storage unit 220 in order for the control unit 210 to be able to process and preprocess the content stored in the storage unit 220. The buffer memory 240 may be implemented separately from the control unit 210 as illustrated in FIG. 2, or may be implemented so as to be included in the control unit 210. The preprocessing of multimedia content includes a pre-read operation of the content stored in the storage unit 220 to write pre-read content into the buffer memory 240, and may further include an operation to analyze metadata that is positioned in the header of the content and which is required to execute the content. Also, the preprocessing operation may vary with respect to the type of content.

Meanwhile, in order to quickly access and execute content that is frequently used by the user, the content providing apparatus 200, according to the current embodiment, further includes a prebuffer 250 to store part of the content used by the user. The prebuffer 250 includes a prebuffer list to allow for a management of content files stored in the prebuffer 250. Here, the part of the content stored by the prebuffer 250 includes high priority metadata that needs to be processed in order to execute the content. in addition to the high priority metadata, the prebuffer 250 may further include part of the content itself (e.g., in the case of audio or video content, frames that should be decoded in the initial stage of the reproduction).

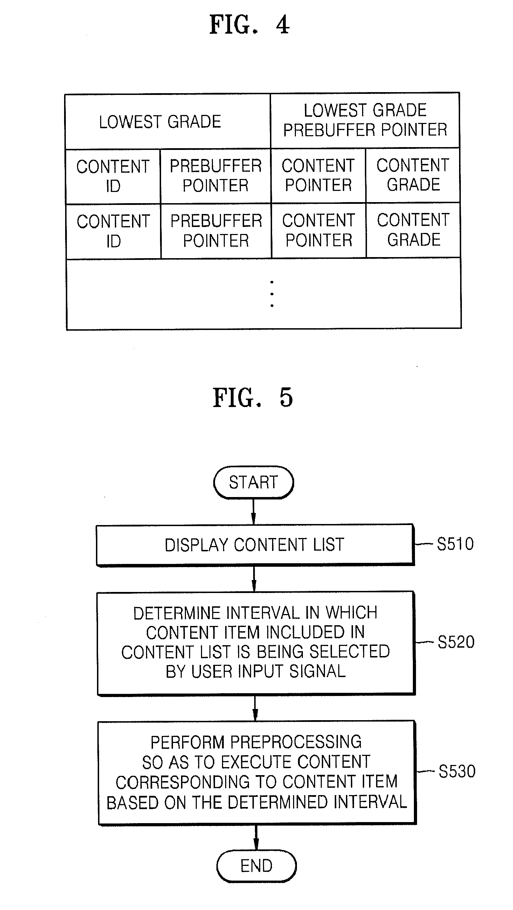

FIG. 4 is a diagram illustrating a structure of a prebuffer list according to an embodiment of the present invention. As shown in FIG. 4, the structure of the prebuffer list includes content ID, which is a unique ID of each content item, a prebuffer pointer, which is information relating to whether the part of the content corresponding to the content ID is stored in the prebuffer 250, and a content pointer, which is information relating to a location where the content corresponding to the content ID is stored in the storage unit 220. In order to manage information relating to whether a content file is frequently used by the user, a content grade is further included in each content file. Also, the prebuffer list further includes a lowest grade for content files stored in the prebuffer 250 and a prebuffer pointer of the content having the lowest grade. The control unit 210 gives an initial grade to each content file, and whenever preprocessing for the content is performed, the control unit 210 raises the grade, thereby managing the content. Also, in order to determine whether a content file is frequently used by the user, the control unit 210 manages the grade of the content on which preprocessing has been performed.

Here, the grade is a content grade stored in the prebuffer list to manage the prebuffer 250 and the content list to manage the storage unit 220. That is, when the content is stored in the prebuffer 250, the content grade included in the prebuffer list is managed, and, if the content is not stored in the prebuffer 250, the content grade included in the content list of the storage unit 220 is managed.

Management of the grade according to the current embodiment will now be explained. If an execution command to execute a content file for which preprocessing has been performed is input, the grade for the content is raised. Here, if the content is stored in the prebuffer 250, the content grade for the content included in the prebuffer list is raised. Meanwhile, if the content is not stored in the prebuffer 250 the content is stored in the content list of the storage unit 220 and the content grade for the content is raised. Then, if the grade is higher than the lowest grade, or equal to or higher than the lowest grade the control unit stores the content file for which preprocessing has been performed in the prebuffer 250. Also, the control unit 210 applies the prebuffer pointer of the content file, which has a current lowest grade, to the prebuffer list, scans the prebuffer 250, and updates the prebuffer list. The control unit 210 then executes the selected content according to the execution command.

Meanwhile, if an execution command of another content file for which preprocessing is not performed is input, the control unit lowers the grade of the content which is preprocessed. At this point, if the content is stored in the prebuffer 250, the content grade included in the prebuffer list is lowered, and if the content is not stored in the prebuffer 250, the content grade included in the content list of the storage unit 220 is lowered.

FIG. 5 is a flowchart illustrating a method of preprocessing content according to an embodiment of the present invention. In operation S510, a content list, including content items, is displayed. In operation S520, an interval during which one content item included in the content list is selected by a user input signal is determined. The interval during which one content item is selected by the user input signal may be an interval in which a cursor, which is moved according to the user input signal, stays on one content item.

In operation S530, based on the determined interval, preprocessing to execute the content corresponding to the content item is performed. More specifically, in operation S530, a reference time to determine whether to preprocess the content corresponding to the content item is determined. The reference time is an average value of the amounts of time taken by the user to select the content items included in the content list and to generate a user input signal in accordance with that selection. Determination of the reference time may be performed whenever the interval in which the content item is being selected by the user input signal is included in a predetermined range including an average value. If the determined interval is equal to or greater than the reference time, the content corresponding to the content item is preprocessed. Here, the preprocessing operation includes pre-reading the selected content.

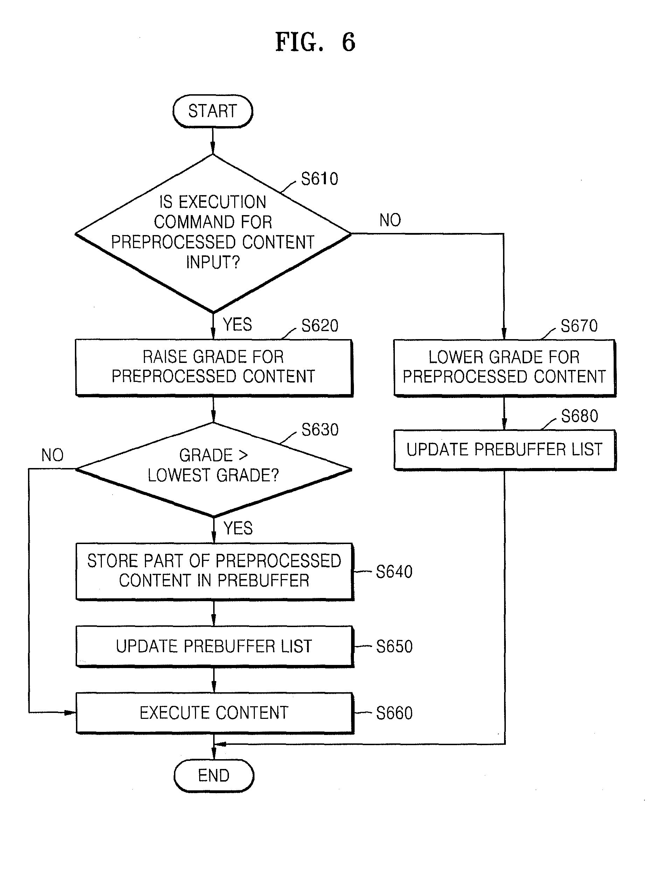

FIG. 6 is a flowchart illustrating a method of providing content by using a method of preprocessing content according to an embodiment of the present invention. In operation S610, whether an execution command to execute the content on which preprocessing has been performed is input is determined. Then, according to the determination, an operation to manage the grade of the content on which preprocessing has been performed is performed. The managing of the grade may be part of the preprocessing operation. In operation S620, if the execution command for the content on which preprocessing has been performed is input, the grade of the content is raised.

In operation S630, whether the grade of the content is higher than the lowest grade corresponding to the grades of the content files stored in a prebuffer is confirmed. In operation S640, part of the content on which preprocessing has been performed is stored in the prebuffer. Meanwhile, if the prebuffer fills up, deletion of the content corresponding to the lowest grade may be performed. Here, the part of the content on which preprocessing has been performed includes high priority metadata that is required to be processed.

In operation S650, if the lowest grade is changed, an update operation to change the prebuffer pointers of the lowest grade and the prebuffer pointer of the content having the lowest grade included in the prebuffer list is performed. Also, since the new content is added to the prebuffer, the prebuffer is scanned and the prebuffer list is updated in operation S650. Then, in operation S660, the selected content is executed according to the execution command. Operation S660 may be performed in any operation after the execution command is input. Meanwhile, if an execution command for a content file other than the content on which preprocessing has been performed is input, the grade for the content on which preprocessing has been performed is lowered in operation S670. In order to apply the lowered grade to the prebuffer list, the prebuffer list is updated in operation S680. The method illustrated in FIG. 6 may be performed continuously after the content preprocessing method illustrated in FIG. 5 is performed.

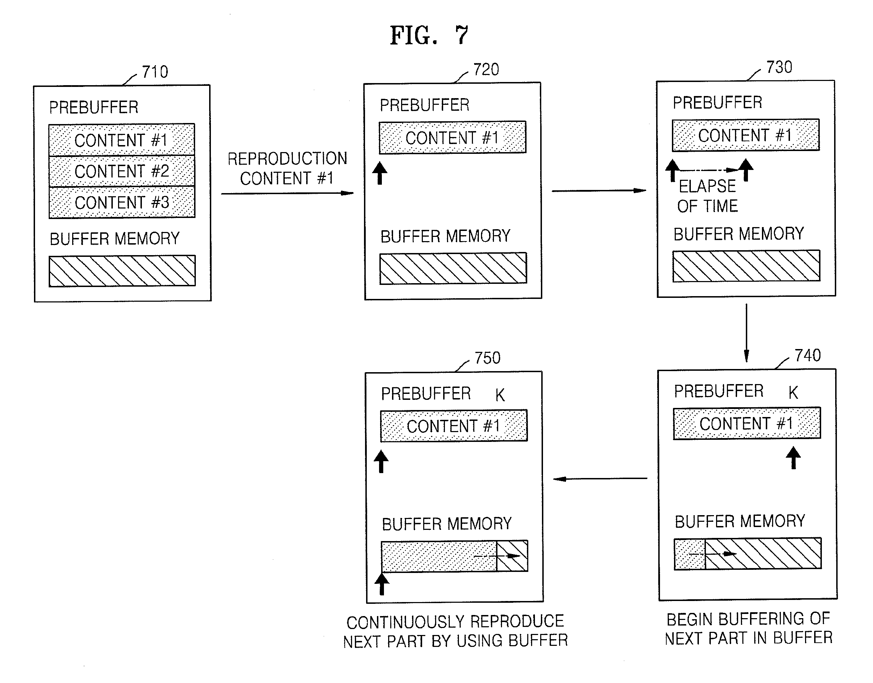

FIG. 7 is a diagram illustrating a process in which, when part of content for which a content execution command is received, is stored in a prebuffer 250, the content stored in the prebuffer 250 and a buffer memory 240 is executed according to an embodiment of the present invention. In FIG. 7, hatching with dotted lines indicates a state in which data is filled in the prebuffer 250 or the buffer memory 240, while hatching with solid lines indicates a state when the prebuffer 250 or the buffer memory 240 is empty.

If a content execution command for content #1 is input from a user interface unit 230, and if part of content #1 is stored in the prebuffer 250, as is illustrated in the box indicated by reference numeral 710, a control unit 210 reads part of the content stored in the prebuffer 250, which has high priority, and begins to provide the content as illustrated in a box indicated by reference numeral 720.

If time elapses as is illustrated in the box indicated by reference numeral 730, and if time K elapses as is illustrated in the box indicated by reference numeral 740, the control unit 210 reads a part next to the part of content #1 stored in the prebuffer 250 from the storage unit 220 and begins buffering in the buffer memory 240.

Accordingly, as is illustrated in the box indicated by reference numeral 750, the control unit 210 continuously reproduces content #1 using the part of content #1 buffered in the buffer memory 240 from the storage unit 220. In this way, while retrieving data in the storage unit 220, which is a large-capacity storage medium, and buffering the data, the control unit 210 is able to access the content stored in advance in the prebuffer 250 and to provide the content. Accordingly, the execution speed of the content may be improved.

The present invention may also be embodied as computer readable codes on a computer readable recording medium. The computer readable recording medium is any data storage device that stores data which may be thereafter read by a computer system. Examples of the computer readable recording medium include read-only memory (ROM), random-access memory (RAM), CD-ROMs, magnetic tapes, floppy disks, optical data storage devices, and a computer data signal embodied in a carrier wave comprising a compression source code segment and an encryption source code segment (such as data transmission through the Internet). The computer readable recording medium may also be distributed over network coupled computer systems so that the computer readable code is stored and executed in a distributed fashion. According to aspects of the present invention as described above, the content which is to be executed by the user is predicted, and preprocessing for the content is performed to increase the execution speed of the content when the user executes the content. Also, according to aspects of the present invention, content files are managed using grades and the content files, which the user frequently uses, are stored separately in the prebuffer. Thus, execution of the content files may be quickly performed.

Although a few embodiments of the present invention have been shown and described, it would be appreciated by those skilled in the art that changes may be made in these embodiments without departing from the principles of the invention, the scope of which is defined in the claims.

## Claims

1. A method of preprocessing content comprising:
displaying a content list including content items;
determining a time period T for which one of the content items is being selected by a user; and
performing preprocessing of the selected content item in dependence on a comparison between the determined time period T and a reference time T_{R}.

2. The method according to claim 1, comprising preprocessing the selected content item if the determined time period T is greater than or equal to the reference time T_{R}.

3. The method according to claim 1 or 2, wherein the period T for which the one content item is selected by the user comprises a period during which a displayed cursor, which is moved according to an input signal generated by the user, remains on the content item.

4. The method according to claim 1, 2 or 3, further comprising determining the reference time T_{R}.

5. The method according to claim 4, wherein determining the reference time comprises determining an average value of the amounts of time taken by the user input signal to select content items included in the content list.

6. The method according to claim 5, wherein determining the reference time is performed when the period, during which each of the selected content items is being selected by the user input signal, is within a predetermined range of times T_{R-α}, T_{R+β} including the average value of the amounts of time.

7. The method according to any one of the preceding claims, wherein the preprocessing comprises pre-reading the content.

8. The method according to any one of the preceding claims, further comprising:
managing a grade of the content on which preprocessing has been performed; and
storing part of the content, on which preprocessing has been performed based on the grade of the content, in a prebuffer.

9. The method according to claim 8, wherein the managing of the grade of the content on which preprocessing has been performed further comprises:
if an execution command for the content on which preprocessing has been performed is input, raising the grade; and
if an execution command for a content file other than the content on which preprocessing has been performed is input, lowering the grade.

10. The method according to claim 8 or 9, wherein the part of the content includes metadata that needs to be processed with priority in order to execute the content.

11. The method according to claim 8, 9 or 10, wherein the storing of the part of the content is performed when the grade is equal to or higher than a lowest grade among grades corresponding to content files stored in the prebuffer.

12. A content providing apparatus comprising:
means for displaying a content list including content items;
means for determining a time period T for which one of the content items is being selected by a user; and
means for preprocessing the selected content item in dependence on a comparison between the determined time period T and a reference time T_{R}.

13. The content providing apparatus of claim 12, wherein the preprocessing means is arranged to preprocess the selected content item if the determined time period T is greater than or equal to the reference time T_{R}.

14. The content providing apparatus of claim 12 or 13, further comprising:
a storage unit to store a plurality of content items; and
a user interface unit to receive a user input signal for selecting one of the content items.

15. The apparatus according to any one of claims 12 to 14, wherein the period for which the one content item is being selected by the user comprises a period during which a displayed cursor, which is moved according to a user input signal, remains on the content item.

16. The apparatus according to any one of claims 12 to 15, further comprising means for determining the reference time.

17. The apparatus according to claim 16, wherein the determining means is arranged to determine an average value of the amounts of time taken by the user input signal to select content items included in the content list to be the reference time.

18. The apparatus according to claim 17, wherein the determining means is arranged to determine the reference time when the interval, during which each of the selected content items is being selected by the user input signal, is within a predetermined range of time including the average value of the amounts of time.

19. The apparatus according to any one of claims 12 to 18, further comprising a buffer memory to buffer the content from a storage unit storing the content items to allow the preprocessing means to preprocess the content stored in the storage unit, wherein the preprocessing comprises pre-reading of the content stored in the storage unit to write pre-read content into the buffer memory.

20. The apparatus according to any one of claims 12 to 19, further comprising a prebuffer memory to store a part of the content on which preprocessing has been performed, wherein, if an execution command for the content stored in the prebuffer is input, the part of the content stored in the prebuffer with priority is arranged to be executed.

21. The apparatus according to claim 20, arranged to manage the grade of the content on which preprocessing has been performed, and to store the part of the content in the prebuffer based on the grade.

22. The apparatus according to claim 21, wherein, if an execution command for the content on which preprocessing has been performed is input, a control unit is arranged to raise the grade, and, if an execution command for a content file other than the content on which preprocessing has been performed is input, the control unit is arranged to lower the grade.

23. The apparatus according to claim 21 or 22, wherein the part of the content comprises metadata that needs to be processed with priority in order to execute the content.

24. The apparatus according to any one of claims 21 to 23, wherein, if the grade is equal to or higher than a lowest grade among grades corresponding to content files stored in the prebuffer, a control unit is arranged to store the part of the content on which preprocessing has been performed in the prebuffer.

25. A computer program which, when executed by a processor, is arranged to perform a method according to any one of claims 1 to 11.

26. A content preprocessing method comprising:
predicting that multimedia content is to be executed by a user; and
performing preprocessing of the predicted multimedia content so as to facilitate execution of the multimedia content.

27. An apparatus including a memory in which multimedia content items are stored, the apparatus comprising a control unit to predict that particular multimedia content is to be executed by a user, and to perform preprocessing of the predicted multimedia content so as to facilitate an execution of the multimedia content.
